# EUROPEAN PATENT APPLICATION

(11) **EP 4 835 406 A1**
(43) Date of publication of application: **04.11.2026**
(21) Application number: 26157584.9
(22) Date of filing: 10.02.2026
(51) Int. Cl.: G01C 19/72, G02B 1/00

(54) **TECHNIQUES FOR DIMINISHING OPTICAL SIGNAL PHASE NOISE IN A SUB-BAND AND GYROSCOPE APPLICATIONS THEREOF**

(30) Priority: 30.04.2025 US 202563797636 P; 06.08.2025 US 202519291951
(71) Applicant: Honeywell International Inc., Charlotte, NC 28202 (US)
(72) Inventor: STRANDJORD, Lee K., Charlotte, 28202 (US); SANDERS, Glen A., Charlotte, 28202 (US); SMICIKLAS, Marc, Charlotte, 28202 (US); QIU, Tiequn, Charlotte, 28202 (US); WU, Jianfeng, Charlotte, 28202 (US)
(74) Representative: Haseltine Lake Kempner LLP

(57) **Abstract**

Embodiments of the invention provide a technological improvement to resonant optical gyroscopes, *e.g*., resonant fiber optical gyroscopes (RFOGs). The ROG includes at least two coherent optical sources each of which utilize feed forward to reduce optical power spectral density, in a phase noise sub-band, in each of an upper and a lower phase noise sidebands of an optical signal generated by each of the at least two coherent optical sources. Each phase noise sub-band has a bandwidth less than a bandwidth of a phase noise sideband in which it resides. By reducing optical power spectral density in the sub-bands, the ARW noise component of data generated by a ROG is diminished. Thus, the circular probability error around a geographic position, determined using such data from a ROG using at least two such coherent optical sources, is diminished.

## Description

### CROSS-REFERENCE TO RELATED APPLICATIONS

The present application claims benefit of U.S. Patent Application Serial No. 63/797,636 filed April 30, 2025; the entire contents of the aforementioned patent application are incorporated herein by reference as if set forth in its entirety.

### STATEMENT REGARDING FEDERALLY SPONSORED RESEARCH OR DEVELOMENT

This invention was made with Government support under Contract No. FA9453-20-C-0013 awarded by AFRL. The Government has certain rights in the invention.

### BACKGROUND

Angle random walk (ARW) noise component of data generated by a resonant optical gyroscope (ROG) affects a circular error probability error circle around a geographical position determined using such ROG data. ARW noise can be diminished by suppressing phase noise in phase noise sub-bands of coherent optical signals used in the ROG.

Conventional techniques for diminishing such optical signal phase noise in the sub-bands use optical filter(s) and high bandwidth negative feedback loop(s). The optical filter(s) diminish power of the optical signal and thus undesirably increase ROG output noise. The high bandwidth negative feedback loops are prone to failure which can cause insensitivity to rotation at certain rotation rates which detrimentally diminishes ROG reliability. ROG's using such feedback loop(s) also are complex and expensive to implement.

### SUMMARY

In some aspects, the techniques described herein relate to an apparatus configured to suppress optical power spectral density in a sub-band in each phase noise sideband of a coherent optical signal, the apparatus including: an optical splitter configured to split the coherent optical signal into a first portion and a second portion; an optical delay configured to delay the first portion by a time delay; a frequency discriminator circuit configured to generate at least one discriminator signal each of whose change in an amplitude is proportional to a change in an optical frequency of the second portion; a first circuit configured to convert the at least one discriminator signal, or another discriminator signal derived therefrom, to a feed forward signal in which a change of amplitude is proportional to a change in phase of the second portion in each sub-band, wherein each sub-band has a bandwidth less than a bandwidth of a phase noise sideband in which it resides; and based upon the time delay, a phase modulator configured to suppress phase noise in phase noise sub-bands of a time delayed first portion using the time delayed first portion and the feed forward signal.

In some aspects, the techniques described herein relate to a method for suppressing optical power spectral density in a sub-band in each phase noise sideband of a coherent optical signal, the method including: generating the coherent optical signal; splitting the coherent optical signal into a first portion and a second portion; time delaying the first portion; generating at least one discriminator signal each of whose change in amplitude is proportional to a change in optical frequency of the second portion; converting the at least one discriminator signal, or another discriminator signal derived therefrom, to a feed forward signal in which a change of amplitude is proportional to a change in phase in phase noise sideband sub-bands of the second portion; based on a time delay, phase noise in phase noise sub-bands, of a time delayed first portion, is diminished by phase modulating the time delayed first portion with the feed forward signal, or an amplified feed forward signal, in which the change of amplitude is proportional to the change in phase of the second portion in each sub-band, wherein each sub-band has a bandwidth less than a bandwidth of a phase noise sideband in which it resides.

In some aspects, the techniques described herein relate to a resonant optical gyroscope (ROG) with reduced angle random walk noise, the ROG including: at least two coherent optical sources each of which includes: a laser configured to emit a coherent optical signal; an optical splitter configured to split the coherent optical signal into a first portion and a second portion; an optical delay configured to delay the first portion by a time delay; a frequency discriminator circuit configured to generate at least one discriminator signal each of whose change in an amplitude is proportional to a change in an optical frequency of the second portion; a first circuit configured to convert the at least one discriminator signal, or another discriminator signal derived therefrom, to a feed forward signal in which a change of amplitude is proportional to a change in phase in phase noise sideband sub-bands of the second portion; and based upon the time delay, a phase modulator configured to suppress phase noise in phase noise sub-bands of a time delayed first portion using the time delayed first portion and the feed forward signal; an optical resonator including a rotation axis; and opto-electronic circuitry configured to: receive a first coherent optical signal from a first coherent optical source and a second coherent optical signal from a second coherent optical source; modulate each of the first and the second coherent optical signals; provide a modulated first coherent optical signal and a modulated second coherent optical signal to the optical resonator, wherein the modulated first coherent optical signal propagates around the optical resonator in a first direction and the modulated second coherent optical signal propagates around the optical resonator in a second direction opposite the first direction; receive the modulated first coherent optical signal and the modulated second coherent optical signal from the optical resonator; provide a first control signal to the first coherent optical source to adjust a frequency of the first coherent optical signal, wherein the first control signal is derived using the modulated first coherent optical signal received from the optical resonator; provide a second control signal to the second coherent optical source to adjust a frequency of the second coherent optical signal, wherein the second control signal is derived using the modulated second coherent optical signal received from the optical resonator; and using a difference in frequencies of an adjusted first and an adjusted second optical signals, generate a signal indicative of a rate of rotation of the ROG around the rotation axis.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1 illustrates a diagram of one embodiment of upper phase noise sideband of an optical signals, e.g., a coherent optical signal;
FIG. 2 illustrates a block diagram of one embodiment of a coherent optical source configured to suppress optical power spectral density of phase noise in spectral regions, or phase noise sub-bands, of the optical signal generated by the coherent optical source;
FIG. 3 illustrates a diagram of one embodiment of the frequency discriminator;
FIG. 4 illustrates a block diagram of one embodiment of a phase noise sub-band frequency to phase converter;
FIG. 5 illustrates a block diagram of another embodiment of a coherent optical source configured to suppress optical power spectral density of phase noise sub-bands of the optical signal generated by the coherent optical source;
FIG. 6 illustrates a diagram of another embodiment of the frequency discriminator;
FIG. 7 illustrates a block diagram of one embodiment of a resonant optical gyroscope according to embodiments of the invention; and
FIG. 8 illustrates a flow diagram of one embodiment of a method of reducing angle random walk noise in an ROG.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized, and that structural, mechanical, and/or electrical changes may be made. Furthermore, each method presented in the drawing figures and the specification is not to be construed as limiting the order in which the individual steps may be performed. The following detailed description is not to be taken in a limiting sense.

Embodiments of the invention provide a technological improvement to resonant optical gyroscopes, e.g., resonant fiber optical gyroscopes (RFOGs). The ROG includes two or more coherent optical sources each of which utilize feed forward to reduce optical power spectral density, in a phase noise sub-band in each of upper and lower phase noise sidebands of an optical signal generated by each of the at least two coherent optical sources. Each phase noise sub-band has a bandwidth less than a bandwidth of a phase noise sideband in which it resides. By reducing optical power spectral density in the sub-bands, the ARW noise component of data generated by a ROG is diminished. Thus, the circular error probability around the geographic position, determined using such data from a ROG using at least two such coherent optical sources, is diminished. Optionally, the phase noise in the sub-bands is diminished by a factor of between six and ten.

Because a high bandwidth feedback loop is no longer used, the ROG, using the at least two such coherent optical sources, no longer suffers from unlocking and thus has increased reliability. Further, each of the two coherent optical sources using this feed forward technique is less complex and less expensive to implement in comparison to optical sources using the prior art feedback technique.

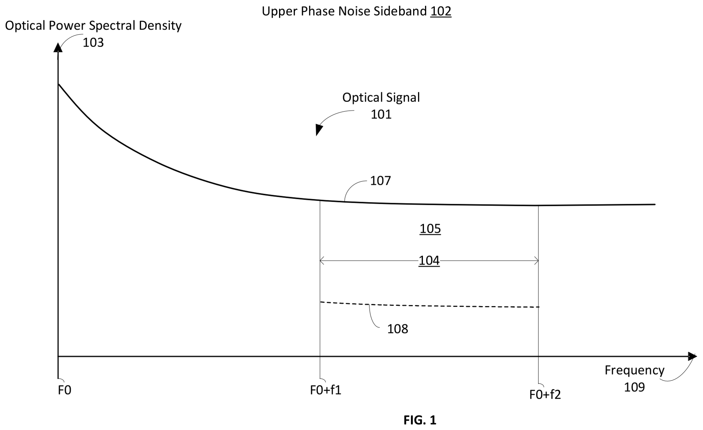

FIG. 1 illustrates a diagram of one embodiment of upper phase noise sideband 102 of an optical signal 101, *e.g.*, a coherent optical signal. The diagram includes an x-axis representing frequency 109 and a y-axis representing optical power spectral density 103.

The optical signal 101 includes the upper phase noise sideband 102 and a lower phase noise sideband (not shown) which is substantially similar to the upper phase noise sideband 102 and is mirrored around a center frequency f0. Each of the upper phase noise sideband 102 and the lower phase noise sideband includes a sub-band defined by two sideband frequencies. For the upper phase noise sideband, the two sideband frequencies are a first upper sideband frequency f0+f1 equal to the center frequency f0 plus a first offset frequency f1 and a second upper sideband frequency f0+f2 equal to the center frequency f0 plus a second offset frequency f2. The second offset frequency is larger than the first offset frequency. The lower phase noise sideband has two corresponding sideband frequencies: a first lower sideband frequency f0-f1 equal to the center frequency f0 minus the first offset frequency f1 and a second lower sideband frequency f0-f2 equal to the center frequency f0 minus the second offset frequency f2.

Each sub-band, of the upper and lower phase noise sub-bands, has a bandwidth 104 defined by a difference in corresponding upper and lower sideband frequencies. For example, the bandwidth 104 of each sub-band equals a difference between the second offset frequency f2 and the first offset frequency f1. For each sub-band, a first sub-band frequency (*e.g*., the first upper sub-band frequency f0+f1, is offset from the center frequency by 1 MHz and the second sub-band f2 frequency (*e.g.*, the second upper sub-band frequency f0+f2) is offset from the center frequency by 20MHz; thus, for example, for the upper phase noise sub-band 105, the first upper sub-band frequency f0+f1 is 1 MHz larger than the center frequency f0 and the second upper sub-band frequency f0+f2 is 20MHz larger than the center frequency f0. To reduce the ARW noise component of data generated by a ROG using the optical signal 101, optionally, the optical power spectral density is reduced in each sub-band by six to ten times from a first optical power spectral density level over frequency 107 in each sub-band to a second optical power spectral density level over frequency 108.

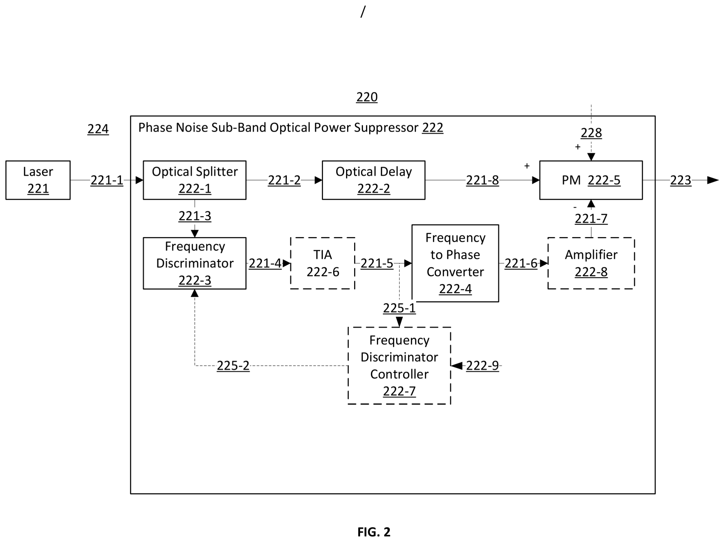

FIG. 2 illustrates a block diagram of one embodiment of a coherent optical source 220 configured to suppress optical power spectral density of phase noise in spectral regions, or phase noise sub-bands, of the optical signal generated by the coherent optical source 220. The coherent optical source 220 includes a laser 221 optically coupled to a phase noise sub-band optical power spectral density suppressor (or phase noise sub-band optical power spectral density suppressor circuit) 222. The laser 221 is configured to emit a coherent optical signal 221-1 with upper and lower phase noise sidebands each of which is centered around the center frequency. The phase noise sub-band optical power spectral density suppressor 222 is configured to receive the coherent optical signal 221-1 and to suppress a power level in a sub-band in each of the upper and lower phase noise sidebands of the coherent optical signal 221-1. The phase noise sub-band optical power spectral density suppressor 222 is further configured to emit a coherent optical signal 223 with a suppressed optical power spectral density level in a sub-band in each of the upper and lower phase noise sidebands.

The phase noise sub-band optical power spectral density suppressor 222 includes an optical splitter (or optical power splitter) 222-1, an optical delay (or optical delay circuit) 222-2, a frequency discriminator 222-3, a frequency to phase converter (frequency to phase converter circuit) 222-4, and a phase modulator (PM or phase modulator circuit) 222-5. The phase noise sub-band optical power spectral density suppressor 222 optionally includes a transimpedance amplifier (TIA) 222-6, a frequency discriminator controller (or frequency discriminator controller circuit) 222-7, and/or an amplifier 222-8. Optionally, the phase modulator 222-5 is an electro-optical phase modulator, e.g., a lithium niobate modulator or a phase modulator based on the Pockels effect.

The optical splitter 222-1 is optically coupled to the laser 221 and is configured to receive the coherent optical signal 221-1 and divide the coherent optical signal 221-1 into a first portion 221-2 of the coherent optical signal 221-1 and a second portion 221-3 of the coherent optical signal 221-1. Each such portion is also a coherent optical signal. Optionally, the optical splitter 222-1 is implemented with an optical coupler or an optical power divider each of which, for example, can be implemented with optical fiber. Optionally, the first portion 221-2 of the coherent optical signal 221-1 has a power level greater than the power level of the second portion 221-3 of the coherent optical signal 221-1.

The optical delay 222-2 is optically coupled to the optical splitter 222-1 and is configured to receive the first portion 221-2. The optical delay 222-2 is further configured to emit a time delayed first portion 221-8 which is the first portion 221-2 delayed by the time delay of the optical delay 222-2. The optical delay 222-2 has a time delay, *e.g.,* due to an optical path length of the optical delay 222-2, so that a feed forward signal 221-6 or an amplified feed forward signal 221-7, when phase modulated onto the time delayed first portion 221-8, suppresses optical power spectral density in each sub-band in the time delayed first portion 221-8. Optionally, the time delay in each sub-band (e.g., at a center frequency (or another frequency within the sub-band) of each phase noise sideband sub-band at which optical power spectral density suppression occurs) causes the feed forward signal 221-6 or the amplified feed forward signal 221-7 to be substantially one hundred and eighty degrees out of phase, in each sub-band, with the time delayed first portion 221-8, *e.g.,* at the phase modulator 222-5, to obtain such suppression. Optionally, the optical delay 222-2 includes an optical waveguide, e.g., a coil of optical fiber whose length establishes the time delay; however, the optical delay 222-2 may be implemented in other ways.

The frequency discriminator 222-3 is configured to receive the second portion 221-3 of the coherent optical signal 221-1. The frequency discriminator 222-3 is configured to proportionally translate a change in frequency of the second portion 221-3, *e.g.,* the coherent optical signal 221-1, to a change in amplitude of a first discriminator signal 221-4, *e.g.,* an electrical signal, emitted by the frequency discriminator 222-3. When an electrical signal, the change in amplitude of the first discriminator signal 221-4 is a change in amplitude of an electrical parameter, *e.g*., current or voltage.

Optionally, when the first discriminator signal 221-4 is an electrical signal whose current amplitude varies in proportion to change in frequency of the second portion 221-3, the optional transimpedance amplifier 222-6 is configured to receive the first discriminator signal 221-4 and to convert the first discriminator signal 221-4 which has a change in current amplitude proportional to a change in frequency of the second portion 221-3 to a second discriminator signal 221-5, *e.g.,* an electrical signal, which has a change in voltage amplitude proportional to a change in the frequency of the second portion 221-3.

The frequency to phase converter 222-4 is configured to receive the first discriminator signal 221-4 from the frequency discriminator 222-3 or the second discriminator signal 221-5 from the optional transimpedance amplifier 222-6. The frequency to phase converter 222-4 is further configured to convert the first or the second discriminator signal 221-4, 221-5 which has an amplitude proportional to the change in frequency of the second portion 221-3, *e.g.,* the coherent optical signal 221-1, to the feed forward signal 221-6 in which a change in amplitude is proportional to a change in phase of the second portion 221-3, *e.g.,* the coherent optical signal 221-1. The frequency to phase converter 222-4 is further configured to perform such conversion substantially only in each sub-band of the second portion 221-3, *e.g.,* the coherent optical signal 221-1, so that the phase noise sub-band optical power spectral density suppressor 222, *e.g.,* the phase modulator 222-5 thereof, suppresses optical power spectral density of the phase noise substantially only in each sub-band.

The optional amplifier 222-8 is configured to receive the feed forward signal 221-6. The optional amplifier 222-8 is further configured to amplify an amplitude of the first feed forward signal 221-6 with a gain which is fixed or varied in response to a temperature of the coherent optical source 220, the laser 221, the phase noise sub-band optical power spectral density suppressor 222, and/or of an environment 224 around one or more of the foregoing. The optional amplifier 222-8 is configured to generate an amplified feed forward signal 221-7.

The phase modulator 222-5 is optically coupled to the optical delay 222-2, and to either the frequency to phase converter 222-4 or the optional amplifier 222-8. The phase modulator 222-5 is configured to receive the time delayed first portion 221-8, and either the feed forward signal 221-6 or the amplified feed forward signal 221-7. By phase modulating the time delayed first portion 221-8 with an amplitude of feed forward signal 221-6 or the amplified feed forward signal 221-7, the phase modulator 222-5 is further configured to diminish the optical power spectral density of the phase noise in each sub-band of the time delayed first portion 221-8. The phase modulator 222-5 is further configured to emit the coherent optical signal 223 with a suppressed, or diminished, optical power spectral density level in each sub-band of the upper and lower phase noise sidebands. Each sub-band has a bandwidth less than a bandwidth of a phase noise sideband in which it resides

Optionally, the phase modulator 222-5 is further configured to receive an optional radio frequency (RF) signal 228. When receiving the optional RF signal 228, the phase modulator 222-5 is further configured to phase modulate the time delayed first portion 221-8 with the optional RF signal 228.

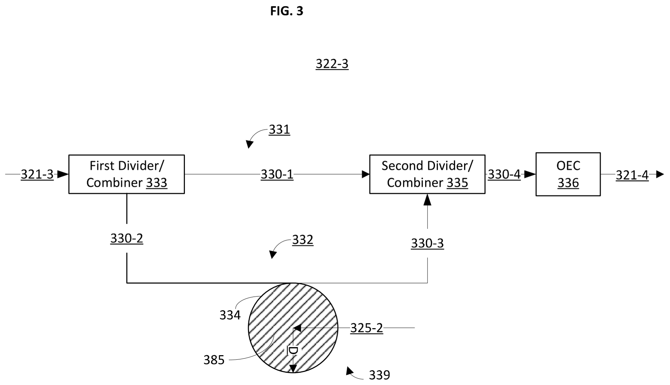

FIG. 3 illustrates a diagram of one embodiment of the frequency discriminator 322-3. The illustrated frequency discriminator 322-3 is implemented as an unbalanced Mach-Zender interferometer. However, the frequency discriminator 222-3 illustrated in FIG. 2 can be implemented in other ways, *e.g.,* as a fiber Bragg grating or a resonator etalon interferometer with a resonator.

Returning to FIG. 3, the illustrated frequency discriminator 322-3 that is an unbalanced Mach-Zender interferometer includes a short optical path 331 and a long optical path 332. The short and the long optical paths 331, 332 are optically coupled in parallel with one another. Each of the short and the long optical paths 331, 332 includes optical waveguide, *e.g*., optical fiber and/or planar optical waveguide. The long optical path 332 has a longer optical path length, and thus optical delay, then the short optical path 331. At the second optical divider/combiner 335, each of the short and the long optical paths 331, 332 have a different optical frequency at any given time due to a difference in their path lengths and a change in an optical frequency of the second portion 321-3 with respect to time. For purposes of clarity, the optical frequency of an optical signal or a portion thereof is the carrier frequency unless express stated otherwise.

The illustrated frequency discriminator 322-3 further comprises a first optical divider/combiner (or a first divider/combiner) 333 configured to receive the second portion 321-3 of the coherent optical signal and to divide such second portion 321-3 into a third portion 330-1 configured to propagate along the short optical path 331 and a fourth portion 330-2 configured to propagate along the long optical path 332.

The long optical path 332 further includes another optical delay 339, *e.g.,* a variable optical delay configured to cause the long optical path 332 to have a longer optical path than the short optical path 331. Optionally, the other optical delay 339 includes optical waveguide, *e.g*., a coil of optical fiber 334. The other optical delay 339 is configured to emit a delayed fourth portion 330-3. Optionally, the variable optical delay includes the coil of optical fiber 334 around a mandrel 385. Optionally, the mandrel is configured to affect the variable optical delay by varying dimension(s), *e.g.*, a diameter D, of the mandrel 385 by varying a temperature of the mandrel 385 and/or where the mandrel includes piezoelectric material. Mandrel control signal(s) 325-2 are applied to the mandrel 385 to control such dimension(s) of the mandrel 385, and hence the other optical delay 339. Optionally, the mandrel 385 may include a heater, *e.g.*, a resistive heater, and/or a thermoelectric cooler to affect temperature, and thus dimensional, changes. Optionally, the mandrel 385 may include piezoelectric material to affect dimensional changes. Optionally, the piezoelectric material is a piezoelectric ceramic such as lead zirconate titanate (PZT), potassium sodium niobate, or sodium bismuth titanate.

When the variable optical delay is utilized, optionally, the piezoelectric control signal 325-2 is configured to maintain a relative phase between the third portion 330-1 and the delayed fourth portion 330-3 that is substantially an integer multiple of ninety degrees to compensate for a frequency response of the frequency discriminator 322-3 (illustrated in FIG. 3) and thus increase, e.g., maximize, sensitivity and linearity of such frequency discriminator 322-3.

The illustrated frequency discriminator 322-3 further comprises a second optical divider/combiner (or a second divider/combiner) 335 configured to receive each of the third portion 330-1 and the delayed fourth portion 330-3, combine the third portion 330-1 and the delayed fourth portion 330-3 into an optical discriminator signal 330-4, and to emit the optical discriminator signal 330-4.

The illustrated frequency discriminator 322-3 includes an optical signal to an electrical signal converter (OEC) 336. The OEC 336 is configured to convert the optical discriminator signal 330-4 to a first discriminator signal 321-4 that is an electrical signal. Optionally the OEC 336 includes a photodetector configured to provide a first discriminator signal 321-4 whose change in current amplitude is proportional to a change in a frequency of the second portion 321-3. The change in current amplitude can occur with a differential change in the short optical path 331 and the long optical path 332; such differential change may occur due to temperature variations of the short optical path 331 and the long optical path 332 and/or due to mechanical vibrations. Optionally, these changes occur at frequencies below, or outside of, a sub-band in which optical power spectral density is suppressed.

Returning to FIG. 2, if the frequency discriminator 222-3 is implemented with the variable optical delay described elsewhere herein, then the coherent optical source 220, *e.g.*, the phase noise sub-band optical power spectral density suppressor 222 further optionally includes a frequency discriminator controller 222-7. Returning to FIG. 2, the frequency discriminator controller 222-7 is configured to receive a portion 225-1 of the first or the second discriminator signal 221-4, 221-5 and a set point parameter (or set point data) 222-9 to generate the piezoelectric control signal 225-2 configured to maintain a relative phase between the third portion 330-1 and the delayed fourth portion 330-3 that is substantially an integer multiple of ninety degrees to compensated for a frequency response of the frequency discriminator 322-3 (illustrated in FIG. 3) and thus increase, *e.g*., maximize, sensitivity and linearity of such frequency discriminator 222-3. Optionally, the set point parameter 222-9 is a voltage and/or is determined by calibration.

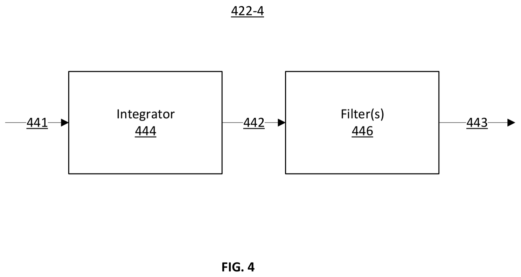

FIG. 4 illustrates a block diagram of one embodiment of a phase noise sub-band frequency to phase converter 422-4. The phase noise sub-band frequency to phase converter 422-4 is configured to convert frequency information in each phase noise sub-band to phase noise information. The frequency to phase converter, however, may be implemented in other ways.

The illustrated frequency to phase converter 422-4 includes an integrator (or integrator circuit) 444 electrically coupled to at least one filter 446. The integrator 444 is configured to receive the first or the second discriminator signal 441, to integrate the first or the second discriminator signal 441, and to emit the integrated discriminator signal 442. Optionally, the integrator 444 is a practical integrator, *e.g*., implemented with a low pass filter. The at least one filter 446 is configured to receive the integrated discriminator signal 442, to band pass filter the integrated discriminator signal 442, and to emit the feed forward signal that is a band pass filtered, integrated discriminator signal 443. Optionally, the at least one filter 446 is either a band pass filter, or a combination of the low pass filter and a high pass filter.

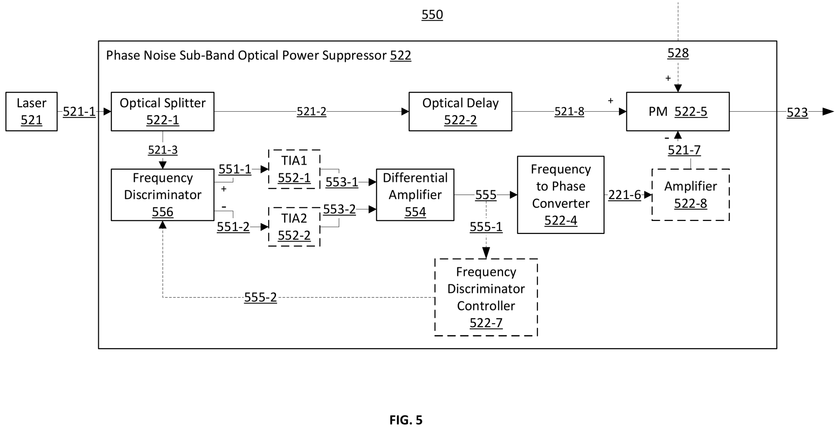

FIG. 5 illustrates a block diagram of another embodiment of a coherent optical source 550 configured to suppress optical power spectral density of phase noise sub-bands of the optical signal generated by the coherent optical source. The coherent optical source 550 of FIG. 5 differs from the coherent optical source of FIG. 2 in that the coherent optical source 550 of FIG. 5 is further configured to suppress, *e.g*., minimize, relative intensity noise (RIN) of the coherent optical signal 521-1. Components and signals in FIG. 5 which have similar element numbers as in FIG. 2 are the same as described with respect to FIG. 2.

Unlike the coherent optical source 220 of FIG. 2, the coherent optical source 550 of FIG. 5 includes a frequency discriminator 556 with a differential output (rather than a single output as with the frequency discriminator 222-3 of FIG. 2) and a differential amplifier 554. The differential amplifier 554 is configured to receive first and second differential components (or third and fourth differential components) and to generate a single ended discriminator signal, *e.g.*, a third discriminator signal, 555 which is a function of, *e.g*., proportional to, the difference of such differential components.

Optionally, because of the differential output of the frequency discriminator 556, the coherent optical source 550 of FIG. 5 includes two transimpedance amplifiers 552-1, 552-2 rather than a single optional transimpedance amplifier 222-6 of FIG. 2. Further, the optional frequency discriminator controller 522-7 of FIG. 5 is configured to receive a portion 555-1 of the single ended discriminator signal 555 output from the differential amplifier, rather than the first or second discriminator signals 221-4, 221-5 of FIG. 2. Because RIN is a form of common mode noise, the RIN of the coherent optical signal 521-1 is suppressed by the differential amplifier 554 and in the single ended discriminator signal 555.

Also, the optional frequency discriminator controller 522-7 of FIG 5 does not require an input of a set point parameter 222-9 as illustrated in FIG. 2 because enhanced, *e.g*., maximum, sensitivity and linearity of the frequency discriminator 556 occurs when the output of the differential amplifier 554 is zero; as a result enhanced, *e.g*., maximum sensitivity and linearity of the frequency discriminator 556 can be maintained over time. The frequency to phase converter 522-4 is configured to receive the single ended discriminator signal 555 and use it to generate the feed forward signal 221-6.

The frequency discriminator 556 in FIG. 5 has a differential output unlike the frequency discriminator 222-3 of FIG. 2 which has a single ended output. As a result, instead of emitting only one signal: the first discriminator signal 221-4, the frequency discriminator 556 of FIG. 5 emits two differential signals: a first differential component 551-1 of the first discriminator signal and a second differential component 551-2 of the first discriminator signal. Optionally, the first and the second differential components 551-1, 551-2 are substantially one hundred and eighty degrees out of phase so that the RIN of in the coherent optical signal 521-1 is diminished, *e.g*., by and at the output of the differential amplifier 554.

Optionally, a first transimpedance amplifier (TIA1) 552-1 is configured to receive the first differential component 551-1 and second transimpedance amplifier (TIA2) 552-2 is configured to receive the second differential component 551-2. Optionally, when the first and the second differential components 551-1, 551-2, of the first discriminator signal, are electrical signals whose current amplitude varies in proportion to change in frequency of the second portion 221-3, then (a) an optional first transimpedance amplifier (TIA1) 552-1 configured to receive the first differential component 551-1 and to convert the first differential component 551-1 which has a change in current amplitude proportional to a change in frequency of the second portion 521-3 to a third differential component 553-1 which has a change in voltage amplitude proportional to a change in the frequency of the second portion 521-3, and (b) an optional second transimpedance amplifier (TIA2) 552-2 configured to receive the second differential component 551-2 and to convert the second differential component 551-2 which has a change in current amplitude proportional to a change in frequency of the second portion 521-3 to a fourth differential component 553-2 which has a change in voltage amplitude proportional to a change in the frequency of the second portion 521-3. The third differential component 553-1 and the fourth differential component 553-2 are a differential signal. Optionally, when the first and the second differential components 551-1, 551-2 are substantially one hundred and eighty degrees out of phase, then the third and the fourth differential components 553-1, 553-2 are also substantially one hundred and eighty degrees out of phase so that the RIN of in the coherent optical signal 521-1 is diminished, *e.g*., by and at the output of the differential amplifier 554.

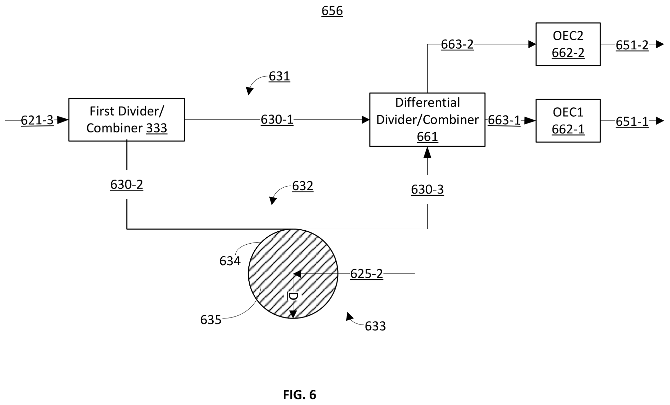

FIG. 6 illustrates a diagram of another embodiment of the frequency discriminator 656. The illustrated frequency discriminator 656 is implemented as an unbalanced Mach-Zender interferometer. However, the frequency discriminator 556 illustrated in FIG. 5 can be implemented in other ways, *e.g*., as a fiber Bragg grating or a resonator etalon interferometer with a resonator.

The frequency discriminator 656 of FIG. 6 differs from the frequency discriminator 322-3 of FIG. 3 in that frequency discriminator 656 of FIG. 6 has a differential output as compared to the single ended output of the frequency discriminator 322-3 of FIG. 3. Components and signals in FIG. 6 which have similar element numbers as in FIG. 3 are the same as described with respect to FIG. 3.

A divider/combiner with a differential output (or a differential divider/combiner) 661 is used in the frequency discriminator 656 of FIG. 6 in lieu of the second divider/combiner 335 of the frequency discriminator 322-3 of FIG. 3 which has a single ended output. The differential output of the differential divider/combiner 661 includes a first optical discriminator signal 663-1 and a second optical discriminator signal 663-2. Optionally, the first and the second optical discriminator signal 663-1, 663-2 are substantially one hundred and eighty degrees out of phase so that the RIN of the coherent optical signal 521-1 is diminished, *e.g*., by and at the output of the differential amplifier 554.

The first optical discriminator signal 663-1 is received by a first optical signal to an electrical signal converter (OEC1) 662-1. The second optical discriminator signal 663-2 is received by a second optical signal to an electrical signal converter (OEC2) 662-2. The first OEC 662-1 is configured to convert the first optical discriminator signal 663-1 to a first differential component 651-1 of the first discriminator signal that is an electrical signal. The second OEC 662-2 is configured to convert the second optical discriminator signal 663-2 to a second differential component 651-2 of the first discriminator signal that is an electrical signal. Optionally each of the first and the second OECs 662-1, 662-2 includes a photodetector configured to provide a differential component 651-1, 651-2 of the first discriminator signal whose current amplitude is proportional to a change in the frequency of the second portion 621-3.

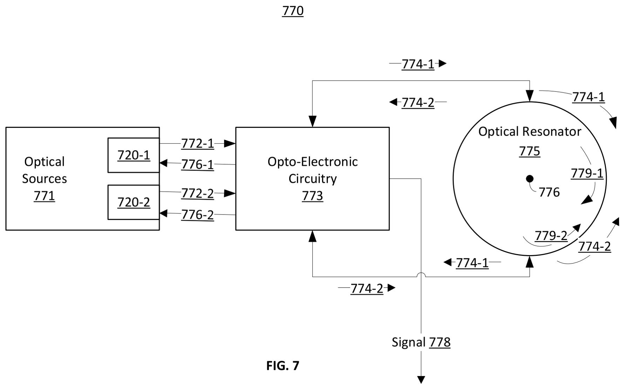

FIG. 7 illustrates a block diagram of one embodiment of a resonant optical gyroscope 770 according to embodiments of the invention. The ROG 770 includes optical sources 771, opto-electronic circuitry 773, and an optical resonator 775. The ROG 770, *e.g.*, the optical resonator 775, has a rotation axis 776. Optionally, the optical resonator 775 is a coil of optical fiber. The ROG 770, *e.g.*, the opto-electronic circuitry 773, is configured to generate a signal indicative determine a rate of rotation around the rotation axis 776. Optionally, the opto-electronic circuitry 773 includes electronic processing circuitry, one or more photodetectors, one or more mirrors, and/or one or more optical couplers.

The optical sources 771 includes at least two coherent optical sources: a first coherent optical source 720-1 and a second coherent optical source 720-2. Each coherent optical source 720-1, 720-2 is configured to suppress optical power spectral density of a sub-band, in each of an upper and a lower phase noise sideband, of the optical signal generated by the coherent optical source. Each coherent optical source 720-1, 720-2, configured to suppress optical power spectral density in such sub-bands, may optionally be implemented as described elsewhere herein.

The opto-electronic circuitry 773 is configured to receive a first coherent optical signal 772-1 from the first coherent optical source 720-1 and a second coherent optical signal 772-2 from the second coherent optical source 720-2. Optionally, the opto-electronic circuitry 773 is further configured to modulate each of the first and the second coherent optical signals 772-1, 772-2. For pedagogical purposes, each of the first and the second coherent optical signals 772-1, 772-2 will be deemed to have been modulated is the subsequent description of the ROG 770.

The opto-electronic circuitry 773 is also configured to provide a modulated first coherent optical signal 774-1 to the optical resonator 775. The modulated first coherent optical signal 774-1 propagates around the optical resonator 775 in a first direction 779-1, *e.g*., clockwise (CW) or counter-clockwise (CCW). The opto-electronic circuitry 773 is also configured to provide a modulated second coherent optical signal 774-2 to the optical resonator 775. The opto-electronic circuitry 773 is also configured to provide the modulated second coherent optical signal 774-2 to the optical resonator 775. The modulated second coherent optical signal 774-2 propagates around the optical resonator 775 in a second direction 779-2, *e.g*., respectively clockwise or counter-clockwise, which is opposite the first direction 779-1.

When the ROG 770, *e.g.*, the optical resonator 775, is rotated around the rotation axis 776, the optical resonator 775 has different resonant frequencies in the first and the second paths. The opto-electronic circuitry 773 is also configured to extract or receive, from the optical resonator 775, each of the modulated first and the modulated second coherent optical signals 774-1, 774-2.

Using the modulated first coherent optical signal 774-1 received from the optical resonator, the opto-electronic circuitry 773 is further configured to generate a first control signal 776-1 and provide the first control signal 776-1 to the first coherent optical source 720-1. The first coherent optical source 720-1 is further configured to receive the first control signal 776-1. The first coherent optical source 720-1 is also configured to use the first control signal 776-1 to adjust (a) a carrier frequency of the first coherent optical signal 772-1 to equal a resonant frequency of the optical resonator in a first direction 779-1 or (b) an odd RF modulation sideband frequency of the first coherent optical signal 772-1 to equal the resonant frequency of the optical resonator in the first direction 779-1.

Using the modulated second coherent optical signal 774-2 received from the optical resonator, the opto-electronic circuitry 773 is further configured to generate a second control signal 776-2 and provide the second control signal 776-2 to the second coherent optical source 720-2. The second coherent optical source 720-2 is further configured to receive the second control signal 776-2. The second coherent optical source 720-2 is also configured to use the second control signal 776-2 to adjust (a) a carrier frequency of the second coherent optical signal 772-2 to equal a resonant frequency of the optical resonator in a second direction 779-2 or (b) an odd RF modulation sideband frequency of the second coherent optical signal 772-2 to equal the resonant frequency of the optical resonator in the second direction 779-2.

Using a difference in the frequencies of the adjusted first and the adjusted second optical signals, *e.g*., with the Sagnac equation, the opto-electronic circuitry 773 is also configured to generate a signal 778 indicative of a rate of rotation (or rotation rate) of the ROG 770, *e.g.*, the optical resonator 775, around the rotation axis 776.

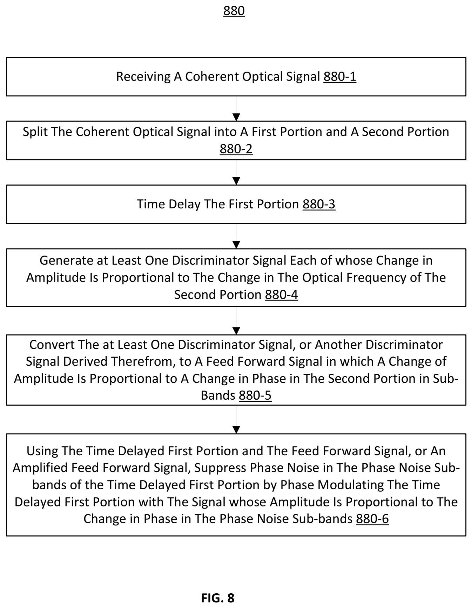

FIG. 8 illustrates a flow diagram of one embodiment of a method 880 of reducing angle random walk noise in an ROG. Exemplary method 880 may be implemented by one or more of the apparatuses illustrated in FIGS. 2-6. To the extent the methods herein are described herein as being implemented with any apparatus(es) illustrated in FIGS. 2-6, it is to be understood that other embodiments can be implemented in other ways. Techniques described with respect to the embodiments illustrated by FIGS. 2-6 may be applicable to the methods described herein.

The blocks of the flow diagrams herein have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In block 880-1, a coherent optical signal is received, *e.g*., from a laser. In block 880-2, the coherent optical signal is split, *e.g.*, by an optical divider/combiner, into a first portion and a second portion. Each such portion is a coherent optical signal. Optionally, the first portion of the coherent optical signal has a power level greater than the power level of the second portion of the coherent optical signal.

In block 880-3, the first portion is time delayed, *e.g*., by an optical delay. The time delay, *e.g.*, a length of an optical delay, is selected so that a feed forward signal or an amplified feed forward signal suppresses optical power spectral density of phase noise in each sub-band in the time delayed first portion. Optionally, the time delay causes the feed forward signal or the amplified feed forward signal to be substantially one hundred and eighty degrees out of phase, *e.g*., with the phase modulator and in each sub-band, with the time delayed first portion.

In block 880-4, at least one discriminator signal, *e.g*., which are electrical signal(s), each of whose change in amplitude is proportional to the change in the optical frequency of the second portion is generated, *e.g*., by a frequency discriminator. Optionally, the at least one discriminator signal is a single ended signal or a differential signal further described elsewhere herein. Optionally, the at least one discriminator signal is the first discriminator signal, or the first and the second differential components, described elsewhere herein. Optionally, the differential signal is a function of, *e.g*., proportional to, the difference of such differential components.

Optionally, the at least one first discriminator signal whose change in amplitude is a change in current amplitude is transformed, *e.g*., by at least one transimpedance amplifier, to at least one other discriminator signal, *e.g.*, a second discriminator signal (or the third and the fourth differential components) described elsewhere herein, whose change in amplitude is a change in voltage amplitude.

In block 880-5, the discriminator signal (*e.g.*, the first or the second discriminator signal), or another discriminator signal derived therefrom (*e.g*., the third discriminator signal), is converted to a feed forward signal in which a change of amplitude is proportional to a change in phase of the second portion, *e.g*., the coherent optical signal, in the sub-bands. Optionally, the feed forward signal is an electrical signal. Optionally, such conversion is performed by an integrator electrically coupled to at least one filter as described elsewhere herein. Optionally, such feed forward signal is amplified generating an amplified feed forward signal in which a change of amplitude is proportional to a change in phase in phase noise sideband sub-bands of the second portion.

In block 880-6, based on the time delay, phase noise in the phase noise sub-bands, of the time delayed first portion, are diminished by phase modulating the time delayed first portion with the feed forward signal, or an amplified feed forward signal,. The time delay is selected so that the feed forward signal or the amplified feed forward signal suppresses optical power spectral density of noise power in each sub-band in the time delayed first portion during the phase modulation. Optionally, the time delay causes the feed forward signal or the amplified feed forward signal to be substantially one hundred and eighty degrees out of phase with the time delayed first portion, in each sub-band, to obtain such suppression. Optionally, such phase modulation is performed with a phase modulator described elsewhere herein. Each sub-band has a bandwidth less than a bandwidth of a phase noise sideband in which it resides.
While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

A processing system may include processor circuitry coupled to memory circuitry. The processor circuitry described herein may include one or more microprocessors, microcontrollers, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), and/or flash memory. Combinations of the above are also included within the scope of computer readable media.

Methods (or portions thereof) of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

### Example Embodiments

Example 1 is an apparatus configured to suppress optical power spectral density in a sub-band in each phase noise sideband of a coherent optical signal, the apparatus comprising: an optical splitter configured to split the coherent optical signal into a first portion and a second portion; an optical delay configured to delay the first portion by a time delay; a frequency discriminator circuit configured to generate at least one discriminator signal each of whose change in an amplitude is proportional to a change in an optical frequency of the second portion; a first circuit configured to convert the at least one discriminator signal, or another discriminator signal derived therefrom, to a feed forward signal in which a change of amplitude is proportional to a change in phase of the second portion in each sub-band, wherein each sub-band has a bandwidth less than a bandwidth of a phase noise sideband in which it resides; and based upon the time delay, a phase modulator configured to suppress phase noise in phase noise sub-bands of a time delayed first portion using the time delayed first portion and the feed forward signal.

Example 2 is the apparatus of Example 1, wherein due to the time delay, the feed forward signal or an amplified feed forward signal are substantially one hundred and eighty degrees out of phase, in each sub-band, with the time delayed first portion at the phase modulator to suppress the phase noise in the phase noise sub-bands of the time delayed first portion.

Example 3 is one of the apparatuses of Examples 1-2, wherein the first circuit comprises circuitry configured to generate the feed forward signal by integrating the discriminator signal, or the other discriminator signal derived therefrom, and band pass filtering an integrated discriminator signal.

Example 4 is one of the apparatuses of Examples 1-3, further comprising a frequency discriminator control circuit configured to generate, using a portion of the discriminator signal and set point data, a mandrel control signal configured to increase sensitivity and linearity of the frequency discriminator circuit; and wherein the frequency discriminator circuit comprises: a first divider combiner configured to split the second portion into a third portion and a fourth portion; a second divider combiner; a first optical path including first optical waveguide and configured to receive the third portion and generate a time delayed third portion, wherein the first optical path is optically coupled between the first and the second divider combiners; a second optical path including second optical waveguide optically coupled to a variable optical delay, wherein the second optical path is configured to receive the fourth portion and generate a time delayed fourth portion, wherein the second optical path is optically coupled between the first and the second divider combiners, and wherein the first and the second optical paths are optically coupled in parallel with one another; wherein the variable optical delay includes a coil of optical waveguide around a mandrel configured to receive the mandrel control signal configured to adjust at least one dimension of the mandrel; wherein the second divider combiner is configured to optically combine the time delayed third portion and the time delayed fourth portion; and an opto-electronic circuit optically coupled to the second divider combiner and configured to receive the time delayed third portion and the time delayed fourth portion and to generate the at least one discriminator signal that is a single ended discriminator signal which is an electrical signal.

Example 5 is the apparatus of Example 4, further comprising a transimpedance amplifier; wherein a change in current amplitude of the single ended discriminator signal is proportional to the change in the optical frequency of the second portion; wherein the transimpedance amplifier is configured to transform the single ended discriminator signal to another single ended discriminator signal whose change in voltage amplitude is proportional to the change in the optical frequency of the second portion.

Example 6 is one of the apparatuses of Examples 1-5, further comprising a laser optically coupled to the optical splitter and configured to generate the coherent optical signal.

Example 7 is one of the apparatuses of Examples 1-6, wherein the optical delay includes a coil of optical fiber.

Example 8 is one of the apparatuses of Examples 1-7, further comprising a differential amplifier; and wherein the frequency discriminator circuit is further configured to generate the at least one discriminator signal that is a differential signal including a first differential component and a second differential component; wherein the differential amplifier is configured to receive the first and second differential components and to generate, using the first and the second differential components, the other discriminator signal that is another single ended discriminator signal; wherein the first circuit is configured to receive the other discriminator signal that is the single ended discriminator signal.

Example 9 is the apparatus of Example 8, further comprising a frequency discriminator control circuit configured to generate, using a portion of the discriminator signal, a mandrel control signal configured to increase sensitivity and linearity of the frequency discriminator circuit; and wherein the frequency discriminator circuit comprises: a first divider combiner configured to split the second portion into a third portion and a fourth portion; a second divider combiner including a first differential output configured to provide a first optical discriminator signal and a second differential output configured to provide a second optical discriminator signal; a first optical path including first optical waveguide and configured to receive the third portion and generated a time delayed third portion, wherein the first optical path is optically coupled between the first and the second divider combiners; a second optical path including second optical waveguide optically coupled to a variable optical delay, wherein the second optical path is configured to receive the fourth portion and generate a time delayed fourth portion, wherein the second optical path is optically coupled between the first and the second divider combiners, and wherein the first and the second optical paths are optically coupled in parallel with one another; wherein the variable optical delay includes a coil of optical waveguide around a mandrel configured to receive the mandrel control signal configured to adjust at least one dimension of the mandrel; wherein the second divider combiner is configured to optically combine the time delayed third portion and the time delayed fourth portion; a first opto-electronic circuit optically coupled to the first differential output and configured to receive the first optical discriminator signal and to generate the first or a third differential component whose amplitude is proportional to an optical power spectral density of the first differential component and which is electrically coupled to the differential amplifier; and a second opto-electronic circuit optically coupled to the first differential output and configured to receive the second optical discriminator signal and to generate the second or a fourth differential component whose amplitude is proportional to an optical power spectral density of the second optical discriminator signal and which is electrically coupled to the differential amplifier.

Example 10 is a method for suppressing optical power spectral density in a sub-band in each phase noise sideband of a coherent optical signal, the method comprising: generating the coherent optical signal; splitting the coherent optical signal into a first portion and a second portion; time delaying the first portion; generating at least one discriminator signal each of whose change in amplitude is proportional to a change in optical frequency of the second portion; converting the at least one discriminator signal, or another discriminator signal derived therefrom, to a feed forward signal in which a change of amplitude is proportional to a change in phase in phase noise sideband sub-bands of the second portion; based on a time delay, phase noise in phase noise sub-bands, of a time delayed first portion, is diminished by phase modulating the time delayed first portion with the feed forward signal, or an amplified feed forward signal, in which the change of amplitude is proportional to the change in phase of the second portion in each sub-band, wherein each sub-band has a bandwidth less than a bandwidth of a phase noise sideband in which it resides.

Example 11 is the method of Example 10, wherein the first portion of the coherent optical signal has a power level greater than the power level of the second portion of the coherent optical signal.

Example 12 is one of the methods of Examples 10-11, wherein due to the time delay, the feed forward signal or the amplified feed forward signal are substantially one hundred and eighty degrees out of phase, in each sub-band, with the time delayed first portion at the phase modulator to suppress the phase noise in the phase noise sub-bands of the time delayed first portion.

Example 13 is one of the methods of Examples 10-12, further comprising generating the other discriminator signal as a function of a differential discriminator signal; wherein generating the at least one discriminator signal includes generating the differential discriminator signal.

Example 14 is a resonant optical gyroscope (ROG) with reduced angle random walk noise, the ROG comprising: at least two coherent optical sources each of which comprises: a laser configured to emit a coherent optical signal; an optical splitter configured to split the coherent optical signal into a first portion and a second portion; an optical delay configured to delay the first portion by a time delay; a frequency discriminator circuit configured to generate at least one discriminator signal each of whose change in an amplitude is proportional to a change in an optical frequency of the second portion; a first circuit configured to convert the at least one discriminator signal, or another discriminator signal derived therefrom, to a feed forward signal in which a change of amplitude is proportional to a change in phase in phase noise sideband sub-bands of the second portion; and based upon the time delay, a phase modulator configured to suppress phase noise in phase noise sub-bands of a time delayed first portion using the time delayed first portion and the feed forward signal; an optical resonator including a rotation axis; and opto-electronic circuitry configured to: receive a first coherent optical signal from a first coherent optical source and a second coherent optical signal from a second coherent optical source; modulate each of the first and the second coherent optical signals; provide a modulated first coherent optical signal and a modulated second coherent optical signal to the optical resonator, wherein the modulated first coherent optical signal propagates around the optical resonator in a first direction and the modulated second coherent optical signal propagates around the optical resonator in a second direction opposite the first direction; receive the modulated first coherent optical signal and the modulated second coherent optical signal from the optical resonator; provide a first control signal to the first coherent optical source to adjust a frequency of the first coherent optical signal, wherein the first control signal is derived using the modulated first coherent optical signal received from the optical resonator; provide a second control signal to the second coherent optical source to adjust a frequency of the second coherent optical signal, wherein the second control signal is derived using the modulated second coherent optical signal received from the optical resonator; and using a difference in frequencies of an adjusted first and an adjusted second optical signals, generate a signal indicative of a rate of rotation of the ROG around the rotation axis.

Example 15 is the ROG of Example 14, wherein due to the time delay, the feed forward signal or an amplified feed forward signal are substantially one hundred and eighty degrees out of phase, in each sub-band, with the time delayed first portion at the phase modulator to suppress the phase noise in the phase noise sub-bands of the time delayed first portion.

Example 16 is one of the ROGs of Examples 14-15, wherein the first circuit comprises circuitry configured to generate the feed forward signal by integrating the discriminator signal, or the other discriminator signal derived therefrom, and band pass filtering an integrated discriminator signal.

Example 17 is one of the ROGs of Examples 14-16, further comprising a frequency discriminator control circuit configured to generate, using a portion of the discriminator signal and set point data, a mandrel control signal configured to increase sensitivity and linearity of the frequency discriminator circuit; and wherein the frequency discriminator circuit comprises: a first divider combiner configured to split the second portion into a third portion and a fourth portion; a second divider combiner; a first optical path including first optical waveguide and configured to receive the third portion and generate a time delayed third portion, wherein the first optical path is optically coupled between the first and the second divider combiners; a second optical path including second optical waveguide optically coupled to a variable optical delay, wherein the second optical path is configured to receive the fourth portion and generate a time delayed fourth portion, wherein the second optical path is optically coupled between the first and the second divider combiners, and wherein the first and the second optical paths are optically coupled in parallel with one another; wherein the variable optical delay includes a coil of optical waveguide around a mandrel configured to receive the mandrel control signal configured to adjust at least one dimension of the mandrel; wherein the second divider combiner is configured to optically combine the time delayed third portion and the time delayed fourth portion; and an opto-electronic circuit optically coupled to the second divider combiner and configured to receive the time delayed third portion and the time delayed fourth portion and to generate the at least one discriminator signal that is a single ended discriminator signal which is an electrical signal.

Example 18 is one of the ROGs of Examples 14-17, wherein the optical delay includes a coil of optical fiber.

Example 19 is one of the ROGs of Examples 14-18, further comprising a differential amplifier; and wherein the frequency discriminator circuit is further configured to generate the at least one discriminator signal that is a differential signal including a first differential component and a second differential component; wherein the differential amplifier is configured to receive the first and second differential components and to generate, using the first and the second differential components, the other discriminator signal that is another single ended discriminator signal; wherein the first circuit is configured to receive the other discriminator signal that is the single ended discriminator signal.

Example 20 is the ROG of Example 19, further comprising a frequency discriminator control circuit configured to generate, using a portion of the discriminator signal, a piezoelectric control signal configured to increase sensitivity and linearity of the frequency discriminator circuit; and wherein the frequency discriminator circuit comprises: a first divider combiner configured to split the second portion into a third portion and a fourth portion; a second divider combiner including a first differential output configured to provide a first optical discriminator signal and a second differential output configured to provide a second optical discriminator signal; a first optical path including first optical waveguide and configured to receive the third portion and generated a time delayed third portion, wherein the first path is optically coupled between the first and the second divider combiners; a second optical path including second optical waveguide optically coupled to a variable optical delay, wherein the second optical path is configured to receive the fourth portion and generate a time delayed fourth portion, wherein the second optical path is optically coupled between the first and the second divider combiners, and wherein the first and the second optical paths are optically coupled in parallel with one another; and wherein the variable optical delay includes a coil of optical waveguide around a piezoelectric configured to receive the piezoelectric control signal; wherein the second divider combiner is configured to optically combine the time delayed third portion and the time delayed fourth portion; a first opto-electronic circuit optically coupled to the first differential output and configured to receive the first optical discriminator signal and to generate the first or a third differential component whose amplitude is proportional to an optical power spectral density of the first differential component and which is electrically coupled to the differential amplifier; and a second opto-electronic circuit optically coupled to the first differential output and configured to receive the second optical discriminator signal and to generate the second or a fourth differential component whose amplitude is proportional to an optical power spectral density of the second optical discriminator signal and which is electrically coupled to the differential amplifier.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An apparatus configured to suppress optical power spectral density in a sub-band in each phase noise sideband of a coherent optical signal, the apparatus comprising:
an optical splitter configured to split the coherent optical signal into a first portion and a second portion;
an optical delay configured to delay the first portion by a time delay;
a frequency discriminator circuit configured to generate at least one discriminator signal each of whose change in an amplitude is proportional to a change in an optical frequency of the second portion;
a first circuit configured to convert the at least one discriminator signal, or another discriminator signal derived therefrom, to a feed forward signal in which a change of amplitude is proportional to a change in phase of the second portion in each sub-band, wherein each sub-band has a bandwidth less than a bandwidth of a phase noise sideband in which it resides; and
based upon the time delay, a phase modulator configured to suppress phase noise in phase noise sub-bands of a time delayed first portion using the time delayed first portion and the feed forward signal.

2. The apparatus of claim 1, wherein due to the time delay, the feed forward signal or an amplified feed forward signal are substantially one hundred and eighty degrees out of phase, in each sub-band, with the time delayed first portion at the phase modulator to suppress the phase noise in the phase noise sub-bands of the time delayed first portion.

3. The apparatus of claim 1, wherein the first circuit comprises circuitry configured to generate the feed forward signal by integrating the discriminator signal, or the other discriminator signal derived therefrom, and band pass filtering an integrated discriminator signal.

4. The apparatus of claim 1, further comprising a frequency discriminator control circuit configured to generate, using a portion of the discriminator signal and set point data, a mandrel control signal configured to increase sensitivity and linearity of the frequency discriminator circuit; and
wherein the frequency discriminator circuit comprises:
a first divider combiner configured to split the second portion into a third portion and a fourth portion;
a second divider combiner;
a first optical path including first optical waveguide and configured to receive the third portion and generate a time delayed third portion, wherein the first optical path is optically coupled between the first and the second divider combiners;
a second optical path including second optical waveguide optically coupled to a variable optical delay, wherein the second optical path is configured to receive the fourth portion and generate a time delayed fourth portion, wherein the second optical path is optically coupled between the first and the second divider combiners, and wherein the first and the second optical paths are optically coupled in parallel with one another;
wherein the variable optical delay includes a coil of optical waveguide around a mandrel configured to receive the mandrel control signal configured to adjust at least one dimension of the mandrel;
wherein the second divider combiner is configured to optically combine the time delayed third portion and the time delayed fourth portion; and
an opto-electronic circuit optically coupled to the second divider combiner and configured to receive the time delayed third portion and the time delayed fourth portion and to generate the at least one discriminator signal that is a single ended discriminator signal which is an electrical signal.

5. The apparatus of claim 4, further comprising a transimpedance amplifier;
wherein a change in current amplitude of the single ended discriminator signal is proportional to the change in the optical frequency of the second portion;
wherein the transimpedance amplifier is configured to transform the single ended discriminator signal to another single ended discriminator signal whose change in voltage amplitude is proportional to the change in the optical frequency of the second portion.

6. The apparatus of claim 1, further comprising a differential amplifier; and
wherein the frequency discriminator circuit is further configured to generate the at least one discriminator signal that is a differential signal including a first differential component and a second differential component;
wherein the differential amplifier is configured to receive the first and second differential components and to generate, using the first and the second differential components, the other discriminator signal that is another single ended discriminator signal;
wherein the first circuit is configured to receive the other discriminator signal that is the single ended discriminator signal.

7. The apparatus of claim 6, further comprising a frequency discriminator control circuit configured to generate, using a portion of the discriminator signal, a mandrel control signal configured to increase sensitivity and linearity of the frequency discriminator circuit; and
wherein the frequency discriminator circuit comprises:
a first divider combiner configured to split the second portion into a third portion and a fourth portion;
a second divider combiner including a first differential output configured to provide a first optical discriminator signal and a second differential output configured to provide a second optical discriminator signal;
a first optical path including first optical waveguide and configured to receive the third portion and generated a time delayed third portion, wherein the first optical path is optically coupled between the first and the second divider combiners;
a second optical path including second optical waveguide optically coupled to a variable optical delay, wherein the second optical path is configured to receive the fourth portion and generate a time delayed fourth portion, wherein the second optical path is optically coupled between the first and the second divider combiners, and wherein the first and the second optical paths are optically coupled in parallel with one another;
wherein the variable optical delay includes a coil of optical waveguide around a mandrel configured to receive the mandrel control signal configured to adjust at least one dimension of the mandrel;
wherein the second divider combiner is configured to optically combine the time delayed third portion and the time delayed fourth portion;
a first opto-electronic circuit optically coupled to the first differential output and configured to receive the first optical discriminator signal and to generate the first or a third differential component whose amplitude is proportional to an optical power spectral density of the first differential component and which is electrically coupled to the differential amplifier; and
a second opto-electronic circuit optically coupled to the first differential output and configured to receive the second optical discriminator signal and to generate the second or a fourth differential component whose amplitude is proportional to an optical power spectral density of the second optical discriminator signal and which is electrically coupled to the differential amplifier.

8. A method for suppressing optical power spectral density in a sub-band in each phase noise sideband of a coherent optical signal, the method comprising:
generating the coherent optical signal;
splitting the coherent optical signal into a first portion and a second portion;
time delaying the first portion;
generating at least one discriminator signal each of whose change in amplitude is proportional to a change in optical frequency of the second portion;
converting the at least one discriminator signal, or another discriminator signal derived therefrom, to a feed forward signal in which a change of amplitude is proportional to a change in phase in phase noise sideband sub-bands of the second portion;
based on a time delay, phase noise in phase noise sub-bands, of a time delayed first portion, is diminished by phase modulating the time delayed first portion with the feed forward signal, or an amplified feed forward signal, in which the change of amplitude is proportional to the change in phase of the second portion in each sub-band, wherein each sub-band has a bandwidth less than a bandwidth of a phase noise sideband in which it resides.

9. The method of claim 8, wherein the first portion of the coherent optical signal has a power level greater than the power level of the second portion of the coherent optical signal.

10. The method of claim 8, wherein due to the time delay, the feed forward signal or the amplified feed forward signal are substantially one hundred and eighty degrees out of phase, in each sub-band, with the time delayed first portion at the phase modulator to suppress the phase noise in the phase noise sub-bands of the time delayed first portion.
